# EUROPEAN PATENT APPLICATION

(11) **EP 4 661 370 A1**
(43) Date of publication of application: **10.12.2025**
(21) Application number: 24886132.0
(22) Date of filing: 24.10.2024
(51) Int. Cl.: H04L 61/3015, H01M 10/42, H04L 61/5038, H04L 12/40, H04L 101/627

(54) **BATTERY SYSTEM AND IDENTIFIER ALLOCATION METHOD THEREFOR**

(30) Priority: 01.11.2023 KR 20230149102
(71) Applicant: LG Energy Solution, Ltd., Seoul 07335 (KR)
(72) Inventor: KIM, Wonhee, Daejeon 34122 (KR)
(74) Representative: Plasseraud IP
(86) International application number: PCT/KR2024/016239
(87) International publication number: WO 2025/095457

(57) **Abstract**

A battery system according to an embodiment of the present invention comprises: a plurality of lower control devices connected in parallel; and an upper control device for controlling the plurality of lower control devices, wherein the upper control device may sequentially allocate identifiers to the plurality of lower control devices and determine whether to terminate identifier allocation for the plurality of lower control devices on the basis of a termination identification signal received from any one of the plurality of lower control devices.

## Description

### [Technical Field]

This application claims priority to and the benefit of Korean Patent Application No. 10-2023-0149102 filed in the Korean Intellectual Property Office on November 1, 2023 the entire contents of which are incorporated herein by reference.

The present invention relates to a battery system and a method for identifier allocation thereof, and more particularly, to a method for assigning identifiers for lower-level control devices in a battery system.

### [Background Art]

An energy storage system (ESS) is a system that relates to renewable energies, batteries that store power, and existing power grids.

Recently, as smart grids and renewable energy are being widely distributed and the efficiency and stability of the power grids are being emphasized, a demand for energy storage systems is increasing.

In general, an energy storage system is provided as a battery system including at least one battery pack or a battery rack.

A battery system may manage batteries therein using a battery management device (BMS; battery management system), individually accommodated in at least one battery pack or battery rack, which provides communication among batteries. Accordingly, the battery management device is required to assign identifiers for managing batteries.

However, a identifier assignment method of the related art has a disadvantage in that a separate circuit is required to assign identifiers according to a connection order of battery management devices.

### [Detailed Description of the Invention]

### [Technical Problem]

To obviate one or more problems of the related art, embodiments of the present disclosure provide a battery system.

To obviate one or more problems of the related art, embodiments of the present disclosure also provide a method for assigning identifiers in the battery system.

### [Technical Solution]

In order to achieve the objective of the present disclosure, a battery system according to embodiments of the present invention may include a plurality of lower-level control devices connected in parallel, and an upper-level control device configured to manage the plurality of lower-level control devices, wherein the upper-level control device sequentially assigns identifiers to the plurality of lower-level control devices and determines whether to terminate the assigning of the identifiers to the plurality of lower-level control devices based on a termination detection signal received from one of the plurality of lower-level control devices.

In addition, the battery system may further include a communication cable connecting the plurality of lower-level control devices and the upper-level control device.

In addition, the upper-level control device may sequentially be connected in series with the plurality of lower-level control devices by the communication cable.

Meanwhile, the upper-level control device may check the termination detection signal of an activated lower-level control device among the plurality of lower-level control devices and terminate the assigning of the identifiers to the plurality of lower-level control devices when the termination detection signal has a specific value.

Here, the termination detection signal may have the specific value when a terminating resistor is connected to one of the plurality of lower-level control devices.

Here, the terminating resistor may be provided to a lower-level control device which is connected last among the plurality of lower-level control devices.

Meanwhile, the upper-level control device may further be configured to transmit an identifier assignment message to an activated lower-level control device among the plurality of lower-level control devices, receive a reception completion message of the identifier assignment message from the activated lower-level control device, and assign an identifier to the activated lower-level control device.

Here, a first lower-level control device among the plurality of lower-level control devices may be activated by a wake-up signal transmitted from the upper-level control device, and one or more lower-level control devices other than the first lower-level control device may be activated by a wake-up signal transmitted from a previously activated lower-level control device connected by a communication cable.

Meanwhile, the upper-level control device may determine whether the activated lower-level control device is abnormal if the reception completion message is not received from the activated lower-level control device.

Here, if the reception completion message is not received from the activated lower-level control device, the upper-level control device may compare information on a number of pre-stored lower-level control devices with information on a last assigned identifier and determine a connection failure of at least one component of the activated lower-level control device based on the comparison.

According to another embodiment of the present disclosure, a method for assigning identifiers in a battery system according to embodiments of the present invention may include sequentially assigning, by an upper-level control device, the identifiers to a plurality of lower-level control devices, and determining, by the upper-level control device, whether to terminate the assigning of the identifiers to the plurality of lower-level control devices based on a termination detection signal received from one of the plurality of lower-level control devices.

In addition, the battery system may further include a communication cable connecting the plurality of lower-level control devices and the upper-level control device.

In addition, the upper-level control device may sequentially be connected in series with the plurality of lower-level control devices by the communication cable.

Meanwhile, the determining whether to terminate the assigning of the identifiers may include checking, by the upper-level control device, the termination detection signal of an activated lower-level control device among the plurality of lower-level control devices, and terminating, by the upper-level control device, the assigning of the identifiers to the plurality of lower-level control devices when the termination detection signal has a specific value.

Here, the termination detection signal may have the specific value when a terminating resistor is connected to one of the plurality of lower-level control devices.

Here, the terminating resistor may be provided to a lower-level control device which is connected last among the plurality of lower-level control devices.

Meanwhile, the sequentially assigning identifiers may include transmitting, by the upper-level control device, an identifier assignment message to an activated lower-level control device among the plurality of lower-level control devices, and upon receiving, by the upper-level control device, a reception completion message of the identifier assignment message from the activated lower-level control device, assigning an identifier to the activated lower-level control device.

Here, a first lower-level control device among the plurality of lower-level control devices may be activated by a wake-up signal transmitted from the upper-level control device, and one or more lower-level control devices other than the first lower-level control device may be activated by a wake-up signal transmitted from a previously activated lower-level control device connected by a communication cable.

Meanwhile, the determining whether to terminate the assigning of the identifiers may further include determining, by the upper-level control device, whether the activated lower-level control device is abnormal if the reception completion message is not received from the activated lower-level control device.

Here, the at least one instruction may further include, if the reception completion message is not received from the activated lower-level control device, determining, by the upper-level control device, a connection failure of at least one component of the activated lower-level control device based on a comparison by comparing information on a number of pre-stored lower-level control devices with information on a last assigned identifier.

### [Advantageous Effects]

According to embodiments of the present invention, a battery system and a method for assigning identifiers thereof, it is possible to identify a termination time of identifier allocation by recognizing a terminating resistor connected to a lower-level control device and to detect hardware abnormalities such as connection failure of a terminal resistor or communication cable, or device failure, in case of identifier allocation error.

### [Brief Description of the Drawings]

FIG. 1 is a block diagram of an energy storage system to which the present invention may be applied.
FIG. 2 is a block diagram of a battery system according to embodiments of the present invention.
FIG. 3 is an image for explaining a communication cable in a battery system according to embodiments of the present invention.
FIG. 4 is an image of a communication network connection structure of a battery system according to embodiments of the present invention.
FIG. 5 is a block diagram of an upper-level control device according to embodiments of the present invention.
FIG. 6 is a block diagram of a lower-level control device according to embodiments of the present invention.
FIG. 7 is a flowchart for explaining a method of assigning identifiers of lower-level control devices by a battery system according to embodiments of the present invention.
FIG. 8 is a flowchart for explaining a process of sequentially assigning identifiers in the identifier assignment method of a battery system according to embodiments of the present invention.
FIG. 9 is a flowchart for explaining a step of analyzing a cause of an abnormality in identifier allocation of the identifier assignment method of a battery system according to embodiments of the present invention.
110: upper-level control device
120: lower-level control device
130: communication cable
140: terminating resistor
111, 121: memory
112, 122: processor
113, 123: transceiver
114, 124: input interface
115, 125: output interface
116, 126: storage device

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, embodiments of the present invention will be described in detail with reference to the accompanying drawings.

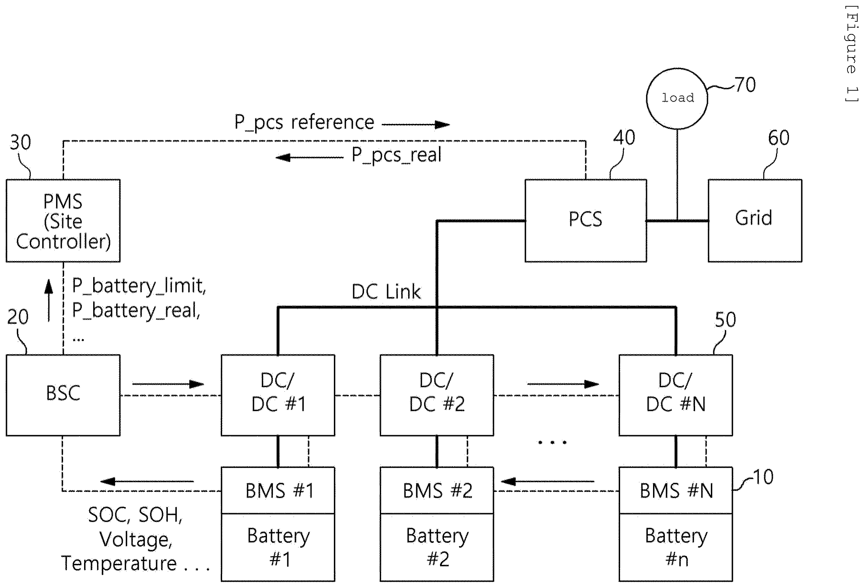

FIG. 1 is a block diagram of an energy storage system to which the present invention may be applied.

Referring to FIG. 1, a battery cell is typically a basic unit of a battery which stores power in an energy storage system (ESS). A series/parallel combination of battery cells may form a battery pack, and a plurality of battery packs may form a battery rack. In other words, a battery rack may be a minimum unit of a battery system as a series/parallel combination of battery packs. Here, depending on the device or system in which the battery is used, the battery pack may also be referred to as a battery module. For example, battery #1, battery #2, ..., battery #N illustrated in FIG. 1 may be in the form of a battery pack or a battery module.

Here, a battery management system (BMS) 10 may be installed in each battery. The BMS 10 may monitor the current, voltage, and temperature of each battery pack (or rack) to be managed, calculate the SOC (State of Charge) based on the monitoring results, and control charging and discharging of the battery pack.

Meanwhile, a battery system controller (BSC) may be installed in each battery system which includes a plurality of batteries and peripheral circuits, devices, etc. Accordingly, the BSC 20 may monitor and control targets such as voltage, current, temperature, circuit breakers, etc. within the battery system.

Meanwhile, communication (indicated by a dotted line in FIG. 1) using Controller Area Network (CAN) or Ethernet may be performed between the BMS 10, the BSC 20, a power management system (PMS) 30, and a power conversion/conditioning system (PCS) 40.

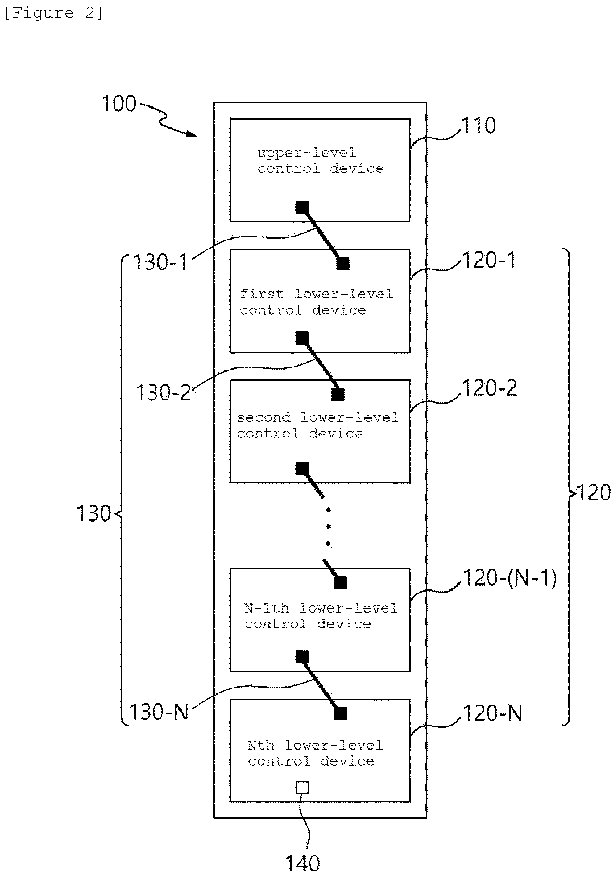

FIG. 2 is a block diagram of a battery system according to embodiments of the present invention.

Referring to FIG. 2, the battery system 100 may include a upper-level control device 110 and a plurality of lower-level control devices 120 that manage battery groups and are controlled by the upper-level control device 110.

In addition, the battery system 100 may include a communication cable 130 and a terminating resistor 140 that connect the upper-level control device 110 and each of the plurality of lower-level control devices 120.

According to embodiments of the present invention, the upper-level control device 110 may control operations of the plurality of lower-level control devices 120. Here, in order for the upper-level control device 110 to control the operations of the plurality of lower-level control devices 120, a unique identifier must be assigned to each of the plurality of lower-level control devices 120. Accordingly, the upper-level control device 110 may individually assign identifiers to the plurality of lower-level control devices 120.

To explain in more detail by configuration, the upper-level control device 110 may sequentially transmit a wake-up signal to the plurality of lower-level control devices 120 through the communication cable 130 to activate them.

Thereafter, the upper-level control device 110 may assign identifiers to the lower-level control devices 120 that are sequentially activated. For example, the upper-level control device 110 may be a battery bank management system (BBMS) or a battery system controller (BSC).

The plurality of lower-level control devices 120 are provided in parallel and may individually manage battery groups. According to embodiments of the present invention, the battery group may be a battery rack. In other words, the plurality of lower-level control devices 120 may be a battery rack management system (RBMS).

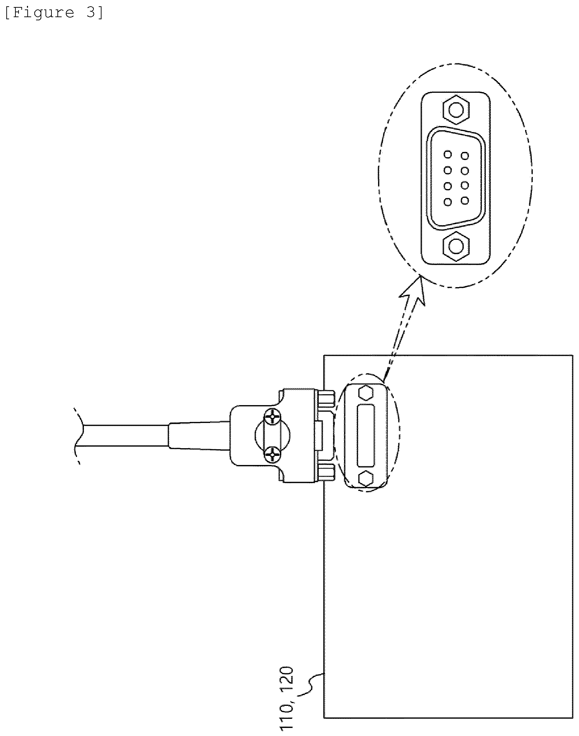

FIG. 3 is an image for explaining a communication cable in a battery system according to embodiments of the present invention.

Referring to FIG. 3, the communication cable 130 may sequentially connect the upper-level control device 110 and each of the plurality of lower-level control devices 120.

According to embodiments of the present invention, the communication cable 130 may be provided in a plurality of cables, so that the communication module of the upper-level control device 110 and the communication modules of each of the plurality of lower-level control devices 120 may be sequentially connected in series.

For example, more specifically, the communication modules of the upper-level control device 110 and the plurality of lower-level control devices 120 may be connected in a daisy chain manner by the communication cable 130. In other words, the upper-level control device 110 and the first lower-level control device 120-1 may be connected to each other by the first communication cable 130-1, the first lower-level control device 120-1 and the second lower-level control device 120-2 may be connected to each other by the second communication cable 130-2, and the N-1th lower-level control device 120-(N-1) and the Nth lower-level control device 120-N may be connected by the Nth communication cable 130-N. Here, N may be a natural number greater than or equal to 1.

The communication cable 130 may be provided as a cable having a plurality of lines. Accordingly, the communication cable 130 may sequentially transmit at least one piece of data between the control devices 110, 120 that are connected in series to each other.

The following [table 1] may be a table (Pin map) that organizes pin information in each of the lower-level control devices 120 to which the lines of the communication cable 130 are individually connected.

According to embodiments, the communication cable 130 may transmit at least one of a wake-up signal, a termination detection signal, a communication network connection signal (CAN Low, CAN High), and ground information (GND) among the control devices 110, 120 through each of the lines, as shown in [Table 1].

**[Table 1]**

| 8 | 7 | 6 | 5 | 4 | 3 | 2 | 1 |
|---|---|---|---|---|---|---|---|
| GND | Wakeup signal | | Termin ation detect ion signal | | | CAN Low | CAN High |

More specifically, according to embodiments, the communication cable 130 may be connected to different pins depending on the control devices 110 and 120 connected.

According to an embodiment, both ends of the first communication cable 130-1 may be connected between the wake-up signal pins, the ground pins and the communication network connection pins (CAN Low, CAN High) of the upper-level control device 110 and the first lower-level control device 120-1, respectively. Here, the wake-up signal may include wake-up voltage signal information.

In addition, according to another embodiment, both ends of the second to Nth communication cables 130 connected in a daisy chain between the first to Nth lower-level control devices 120 may be connected between the wake-up signal pins, the ground pins, and the communication network connection pins (CAN Low, CAN High) of each lower-level control device 120. Here, the termination detection pin may be a pin that transmits an detection signal regarding whether the termination resistor 140 is connected.

According to embodiments, the termination detection pin is provided as a GPIO input pin and may be connected to either the wakeup pin or the ground pin depending on whether the termination resistor 140 is connected.

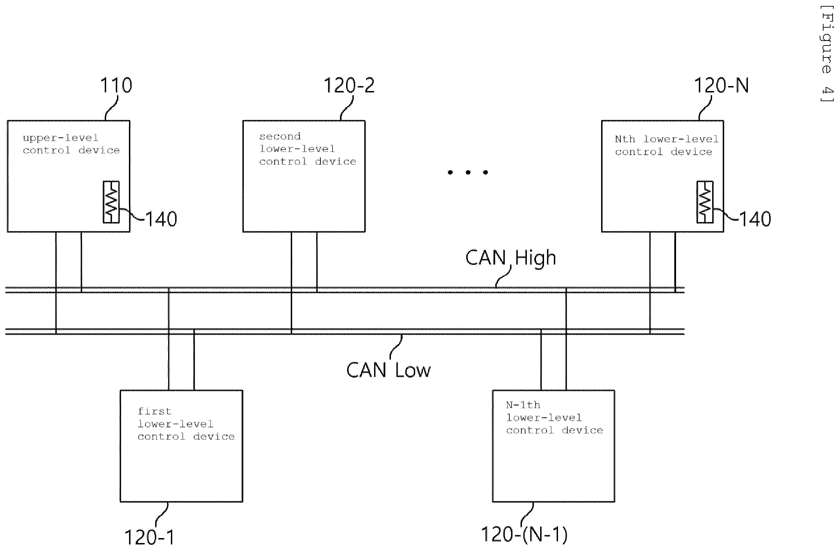

FIG. 4 is an image of a communication network connection structure of a battery system according to embodiments of the present invention.

Referring to FIG. 2 and FIG. 4, terminating resistors 140 may be connected to the upper-level control device 110 and the Nth lower-level control device 120-N located at the beginning and at the end of the communication cable 130.

Here, various impedance resistance values may be applied to the communication cable 130 according to the design criteria.

Accordingly, the battery system according to embodiments of the present invention may reduce reflection phenomenon of communication signal and remove noise by connecting terminating resistors 140 having a specific resistance value to the upper-level control device 110 and the Nth lower-level control device 120-N to which the Nth-1 communication cable 130-N is connected, thereby inducing a constant size of current to flow in the communication line. Accordingly, improved communication performance may be provided.

Meanwhile, the terminating resistor 140 connected to the Nth lower-level control device 120-N may be provided in the form of a cable. In other words, the terminating resistor 140 may be connected to pin provided in Nth lower-level control device 120-N. However, the terminating resistor is not limited to what is described, and various forms may be applied such as being inserted into the control device 110 or 120-N or in the form of a cable connector.

Here, the termination detection signal of the terminating resistor 140 may be a signal for identifying whether the terminating resistor 140 is connected.

According to embodiments, the termination detection pin may receive a first signal when the terminating resistor 140 is connected to the lower-level control device and may receive a second signal when the terminating resistor is not connected to the lower-level control device. In other words, the termination detection pin may receive the termination detection signal in the opposite way depending on whether the terminating resistor is connected.

In more detail, according to an embodiment, the upper-level control device recognizes a first signal received from any one of the first to N-1th lower-level control devices 120-1 to 120-N-1 to which the terminating resistor 140 is not connected, as a low signal, when the wake-up signal pin is connected to the termination detection pin. Accordingly, the upper-level control device recognizes the signal received from the Nth lower-level control device 120-N to which the terminating resistor 140 is connected, as a high signal.

According to another embodiment, the upper-level control device recognizes a first signal received from any one of the first to N-1th lower-level control devices 120-1 to 120-N-1 to which the terminating resistor 140 is not connected, as a high signal, when the ground pin is connected to the termination detection pin. Accordingly, the upper-level control device recognizes the signal received from the Nth lower-level control device 120-N to which the terminating resistor 140 is connected, as a low signal

Accordingly, the battery system according to embodiments of the present invention may identify a lower-level control device connected to the terminating resistor among a plurality of lower-level control devices based on the termination detection signal, so that it is possible to identify the end point of identifier assignment or whether there is a communication error when assigning identifiers to a plurality of lower-level control devices.

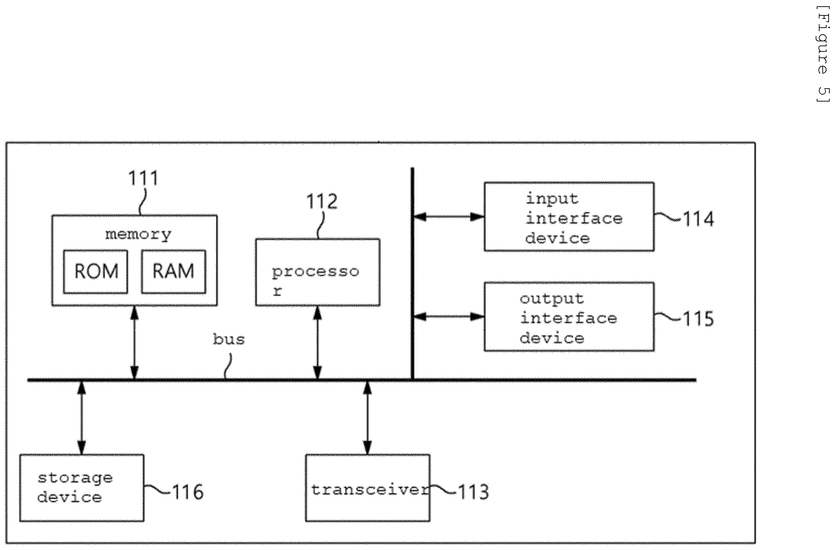

FIG. 5 is a block diagram of an upper-level control device according to embodiments of the present invention.

Referring to FIG. 5, the upper-level control device 110 may include a memory 111, a processor 112, a transceiver 113, an input interface device 114, an output interface device 115, and a storage device 116.

According to embodiments, each of the components 111, 112, 113, 114, 115, 116 included in the upper-level control device 110 may be connected by a bus to communicate with each other. Here, the bus may be a CAN bus.

Among the components 111, 112, 113, 114, 115, 116 of the upper-level control device 110, the memory 111 and the storage device 160 may include at least one of a volatile storage medium and a nonvolatile storage medium. For example, the memory 111 and the storage device 116 may include at least one of a read only memory (ROM) and a random access memory (RAM).

Here, the memory 111 may include at least one instruction executed by the processor 112.

According to embodiments, at least one at least one instruction in the upper-level control device 110 may include an instruction to sequentially assign identifiers to the plurality of lower-level control devices and an instruction to determine whether to terminate the assigning of identifiers to the plurality of lower-level control devices based on a termination detection signal received from one of the plurality of lower-level control devices.

Here, the instruction to determine whether to terminate the assigning of identifiers may include an instruction to check the termination detection signal of an activated lower-level control device among the plurality of lower-level control devices and an instruction to terminate the assigning of identifiers to the plurality of lower-level control devices when the termination detection signal has a specific value.

Meanwhile, the instruction to sequentially assign identifiers may include an instruction to transmit an identifier assignment message to an activated lower-level control device among the plurality of lower-level control devices; and an instruction to, upon receiving a reception completion message of the identifier assignment message from the activated lower-level control device, assign an identifier to the activated lower-level control device.

Meanwhile, the instruction to determine whether to terminate the assigning of identifiers may further include an instruction to determine whether the activated lower-level control device is abnormal if the reception completion message is not received from the activated lower-level control device.

Here, the at least one instruction may further include an instruction to, if the reception completion message is not received from the activated lower-level control device, compare information on a number of the pre-stored lower-level control devices with information on the last assigned identifier and determines a connection failure of at least one component of the activated lower-level control device based on the comparison.

The processor 112 may mean a central processing unit (CPU), a graphics processing unit (GPU), or a dedicated processor on which methods according to embodiments of the present invention are performed.

As described above, the processor 112 may execute at least one program command stored in the memory 111.

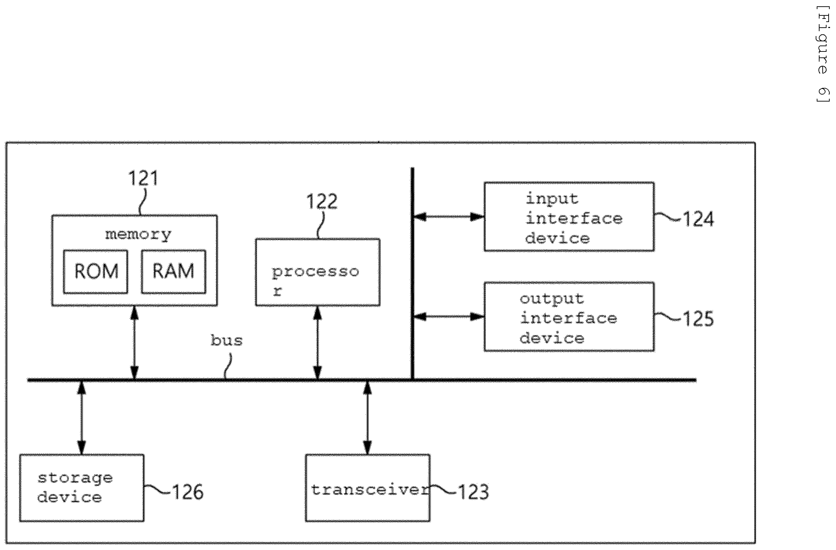

FIG. 6 is a block diagram of a lower-level control device according to embodiments of the present invention.

Referring to FIG. 6, each of the lower-level control devices 120 may include a memory 121, a processor 122, a transceiver 123, an input interface device 124, an output interface device 125, and a storage device 126.

According to embodiments, each of the components 121, 122, 123, 124, 125, 126 included in the lower-level control device 120 may be connected by a bus to communicate with each other. Here, the bus may be a CAN bus.

Among the components 121, 122, 123, 124, 125, 126 of the lower-level control devices 120, the memory 121 and the storage device 126 may include at least one of a volatile storage medium and a nonvolatile storage medium. For example, the memory 121 and the storage device 126 may include at least one of a read only memory (ROM) and a random access memory (RAM).

Here, the memory 121 may include at least one instruction executed by the processor 122.

According to embodiments, at least one instruction in the lower-level control device 120 may include an instruction to be activated by a wake-up signal transmitted from a previously activated lower-level control device connected by a communications cable.

The processor 122 may mean a central processing unit (CPU), a graphics processing unit (GPU), or a dedicated processor on which methods according to embodiments of the present invention are performed.

As described above, the processor 122 may execute at least one program command stored in the memory 121.

Above, the configurations of the battery system according to the embodiment of the present invention have been described. Hereinafter, a method of assigning identifiers of lower-level control devices using the battery system will be described.

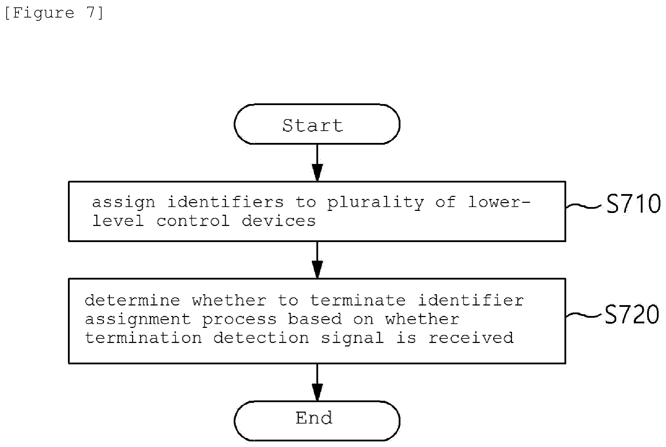

FIG. 7 is a flowchart for explaining a method of assigning identifiers of lower-level control devices by a battery system according to embodiments of the present invention.

Referring to FIG. 7, the upper-level control device 110 in the battery system 100 may sequentially assign identifiers to each of the plurality of lower-level control devices 120 (S710).

Thereafter, the upper-level control device 110 may determine whether to terminate the identifier assignment process based on whether a termination detection signal is received from any one of the plurality of lower-level control devices 120 (S720).

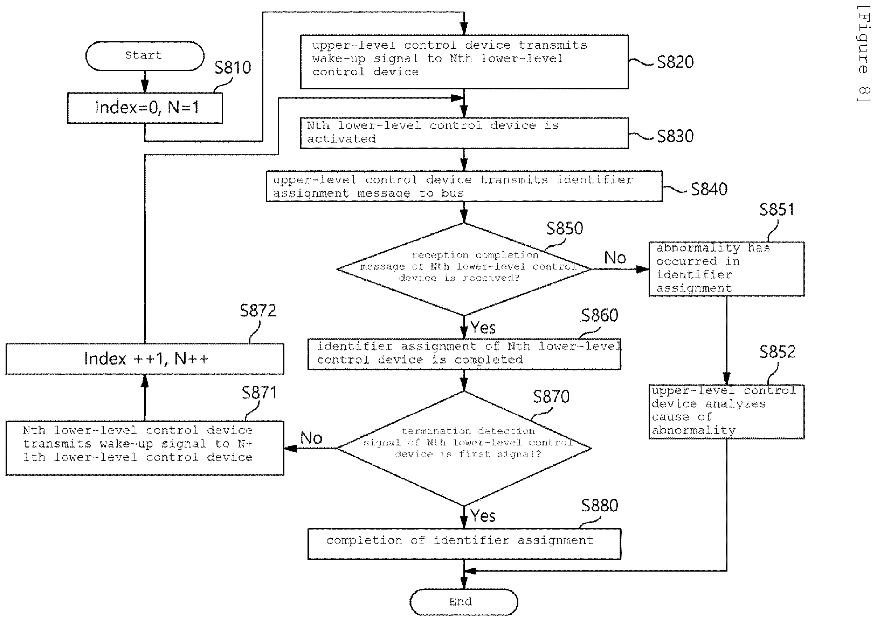

FIG. 8 is a flowchart for explaining a process of sequentially assigning identifiers in the identifier assignment method of a battery system according to embodiments of the present invention.

Referring to FIG. 8, in an initial state (S810), the upper-level control device 110 in the battery system 100 may transmit a wake-up signal to a first lower-level control device 120-1 connected by a communication cable (S820). Accordingly, the first lower-level control device 120-1 may be activated (S830). Here, the initial state is a state in which an index is 0, wherein the index may be information for counting a number of lower-level control devices to which identifiers are assigned.

Thereafter, the upper-level control device 110 may transmit an identifier assignment message to a bus which is a communication network (S840).

Then, the upper-level control device 110 may check whether an identifier is assigned to the first lower-level control device 120-1.

More specifically, the upper-level control device 110 and each of the plurality of lower-level control devices 120 may be independently connected to the bus. According to embodiments, each of the upper-level control device 110 and the plurality of lower-level control devices 120 may be connected to the bus by a first signal and a second signal. Here, the first signal may be a CAN High signal and the second signal may be a CAN Low signal.

Thereafter, the upper-level control device 110 may transmit an identifier assignment message to the bus. Accordingly, the first lower-level control device 120-1 activated by the wake-up signal may receive the identifier assignment message from the bus.

Meanwhile, the upper-level control device 110 may determine whether an identifier has been assigned to the first lower-level control device 120-1 based on whether a reception completion message transmitted from the first lower-level control device 120-1 has been received.

More specifically, when the first lower-level control device 120-1 receives an identifier assignment message, the first lower-level control device may transmit a reception completion message to the upper-level control device 110 through the bus.

Here, when the reception completion message is not received from the first lower-level control device 120-1 (S850), the upper-level control device 110 may determine that an abnormality has occurred in the identifier assignment (S851). Thereafter, the upper-level control device 110 may analyze the cause of the abnormality in the identifier assignment (S852).

Meanwhile, when the reception completion message is received from the first lower-level control device 120-1 (S850), the upper-level control device 110 may confirm that an identifier has been assigned to the first lower-level control device 120-1 (S860). Here, the identifier may be assigned to correspond to the index. For example, the identifier of the first lower-level control device 120-1 may be a value that adds 1 to the initial index (ID = Index+1).

Afterwards, the upper-level control device 110 may check the termination detection signal of the first lower-level control device 120-1 (S870). Here, the termination detection signal may be a signal transmitted through the first communication cable 130-1.

According to an embodiment, if the termination detection signal of the first lower-level control device 120-1 is the first signal (S870), the upper-level control device 110 may confirm that the first lower-level control device 120-1 is the last lower-level control device. Accordingly, the upper-level control device 110 may terminate the identifier allocation process (S880). For example, the first signal of the termination detection signal may be a High (1) value.

According to another embodiment, if the termination detection signal of the first lower-level control device 120-1 is the second signal (S870), the first lower-level control device 120-1 may transmit a wake-up signal to a second lower-level control device 120-2 (S871). Afterwards, the upper-level control device 110 may count the index (Index++) (S872). For example, the second signal of the termination detection signal may be a Low (0) value.

Afterwards, one or more lower-level control device may sequentially repeat steps S830 to S880 until the identifier allocation of the Nth lower-level control device 120-N, which is the last lower-level control device 120, is terminated.

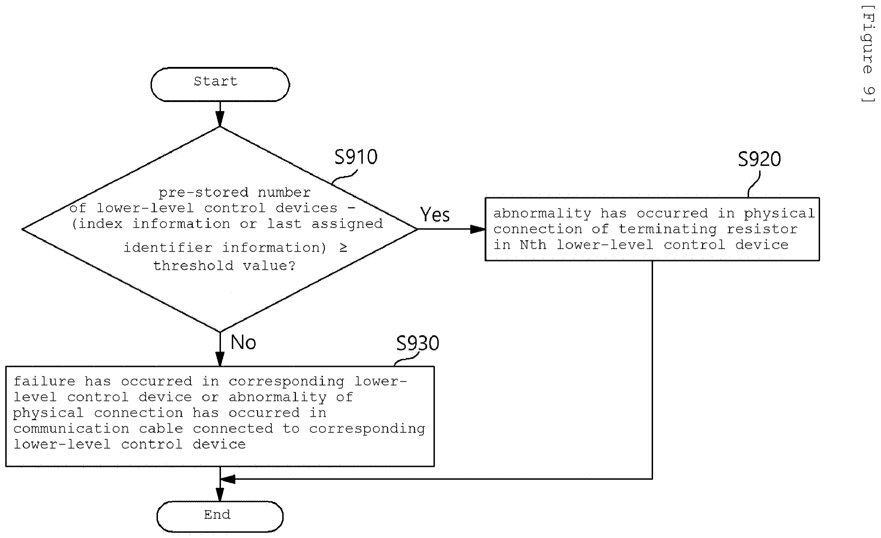

FIG. 9 is a flowchart for explaining a step of analyzing a cause of an abnormality in identifier allocation of the identifier assignment method of a battery system according to embodiments of the present invention.

Referring to FIG. 9, the upper-level control device 110 may check the pre-stored information on a number of a plurality of lower-level control devices 120. Thereafter, the upper-level control device 110 may compare the index information or the last assigned identifier information with the pre-stored number information.

Here, if the index information or the last assigned identifier information is greater than or equal to a threshold value compared to the pre-stored number information (S910), the upper-level control device 110 may determine that an abnormality has occurred in a physical connection of the terminating resistor 140 in the Nth lower-level control device 120-N (S920). In other words, the upper-level control device 110 may determine that a defect has occurred in the connection of the terminating resistor 140.

Meanwhile, if the index information or the last assigned identifier information is less than the threshold value compared to the stored number information (S910), the upper-level control device 110 may determine that a failure has occurred in the corresponding lower-level control device 120 or that a physical connection problem has occurred in a communication cable connected to the corresponding lower-level control device 120 (S930). In other words, the upper-level control device 110 may determine that a failure has occurred in the corresponding lower-level control device 120 or that a defect has occurred in the connection of a communication cable connected to the corresponding lower-level control device 120.

The method for assigning identifiers to lower-level control devices in a battery system according to embodiments of the present invention has been described.

According to embodiments of the present invention, a battery system and a method for assigning identifiers thereof, wherein the battery system includes a plurality of lower-level control devices connected in parallel and an upper-level control device configured to manage the plurality of lower-level control devices, it is possible to identify a termination time of identifier allocation by recognizing a terminating resistor connected to a lower-level control device and to detect hardware abnormalities such as connection failure of a terminal resistor or communication cable, or device failure, in case of identifier allocation error.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that may be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to embodiments of the present invention, but those skilled in the art may appreciate that the present invention may be variously corrected and changed within the range without departing from the spirit and the area of the present invention described in the appending claims.

## Claims

1. A battery system comprising:
a plurality of lower-level control devices connected in parallel; and
an upper-level control device configured to manage the plurality of lower-level control devices,
wherein the upper-level control device sequentially assigns identifiers to the plurality of lower-level control devices and determines whether to terminate the assigning of the identifiers to the plurality of lower-level control devices based on a termination detection signal received from one of the plurality of lower-level control devices.

2. The battery system of claim 1, further comprising:
a communication cable connecting the plurality of lower-level control devices and the upper-level control device.

3. The system of claim 2, wherein the upper-level control device is sequentially connected in series with the plurality of lower-level control devices by the communication cable.

4. The system of claim 3, wherein the upper-level control device checks the termination detection signal of an activated lower-level control device among the plurality of lower-level control devices and terminates the assigning of the identifiers to the plurality of lower-level control devices when the termination detection signal has a specific value.

5. The system of claim 4, wherein the termination detection signal has the specific value when a terminating resistor is connected to one of the plurality of lower-level control devices.

6. The system of claim 5, wherein the terminating resistor is provided to a lower-level control device which is connected last among the plurality of lower-level control devices.

7. The system of claim 1, wherein the upper-level control device is further configured to:
transmit an identifier assignment message to an activated lower-level control device among the plurality of lower-level control devices;
receive a reception completion message of the identifier assignment message from the activated lower-level control device; and
assign an identifier to the activated lower-level control device.

8. The system of claim 7, wherein a first lower-level control device among the plurality of lower-level control devices is activated by a wake-up signal transmitted from the upper-level control device, and
wherein one or more lower-level control devices other than the first lower-level control device are activated by a wake-up signal transmitted from a previously activated lower-level control device connected by a communication cable.

9. The system of claim 7, wherein the upper-level control device determines whether the activated lower-level control device is abnormal if the reception completion message is not received from the activated lower-level control device.

10. The system of claim 9, wherein, if the reception completion message is not received from the activated lower-level control device, the upper-level control device compares information on a number of pre-stored lower-level control devices with information on a last assigned identifier and determines a connection failure of at least one component of the activated lower-level control device based on the comparison.

11. A method for assigning identifiers by a battery system, the method comprising:
sequentially assigning, by an upper-level control device, the identifiers to a plurality of lower-level control devices; and
determining, by the upper-level control device, whether to terminate the assigning of the identifiers to the plurality of lower-level control devices based on a termination detection signal received from one of the plurality of lower-level control devices.

12. The method of claim 11, wherein the battery system includes a communication cable connecting the plurality of lower-level control devices and the upper-level control device.

13. The method of claim 12, wherein the upper-level control device is sequentially connected in series with the plurality of lower-level control devices by the communication cable.

14. The method of claim 11, wherein the determining whether to terminate the assigning of the identifiers includes:
checking, by the upper-level control device, the termination detection signal of an activated lower-level control device among the plurality of lower-level control devices; and
terminating, by the upper-level control device, the assigning of the identifiers to the plurality of lower-level control devices when the termination detection signal has a specific value.

15. The method of claim 14, wherein the termination detection signal has the specific value when a terminating resistor is connected to one of the plurality of lower-level control devices.

16. The method of claim 15, wherein the terminating resistor is provided to a lower-level control device which is connected last among the plurality of lower-level control devices.

17. The method of claim 11, wherein the sequentially assigning identifiers includes:
transmitting, by the upper-level control device, an identifier assignment message to an activated lower-level control device among the plurality of lower-level control devices; and
upon receiving, by the upper-level control device, a reception completion message of the identifier assignment message from the activated lower-level control device, assigning an identifier to the activated lower-level control device.

18. The method of claim 17, wherein a first lower-level control device among the plurality of lower-level control devices is activated by a wake-up signal transmitted from the upper-level control device, and
wherein one or more lower-level control devices other than the first lower-level control device are activated by a wake-up signal transmitted from a previously activated lower-level control device connected by a communication cable.

19. The method of claim 14, wherein the determining whether to terminate the assigning of the identifiers further includes:
determining, by the upper-level control device, whether the activated lower-level control device is abnormal if the reception completion message is not received from the activated lower-level control device.

20. The method of claim 19, further comprising:
if the reception completion message is not received from the activated lower-level control device,
determining, by the upper-level control device, a connection failure of at least one component of the activated lower-level control device based on a comparison by comparing information on a number of pre-stored lower-level control devices with information on a last assigned identifier.
